(19) **Europäisches Patentamt**

**European Patent Office**

**Office européen des brevets**

(11) **EP 1 181 522 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(51) Int Cl.$^7$: **G01M 17/02**

(21) Anmeldenummer: **01909818.5**

(22) Anmeldetag: **03.03.2001**

(86) Internationale Anmeldenummer:
**PCT/EP01/02437**

(87) Internationale Veröffentlichungsnummer:
**WO 01/071307 (27.09.2001 Gazette 2001/39)**

(54) **REGELVERFAHREN FÜR EINEN ZWEIAXIALEN RÄDERPRÜFSTAND ZUR SIMULATION VON FAHRBELASTUNGEN UND ZWEIAXIALER RÄDERPRÜFSTAND**

CONTROL METHOD FOR A BI-AXIAL WHEEL TEST BENCH FOR SIMULATING DRIVING STRESSES AND A BI-AXIAL WHEEL TEST BENCH

PROCEDE DE REGLAGE POUR UN BANC D'ESSAI BIAXIAL DE ROUES PERMETTANT LA SIMULATION DES CHARGES DE MOUVEMENT ET BANC D'ESSAI DE ROUES BIAXIAL

(84) Benannte Vertragsstaaten:
**DE FR GB IT**

(30) Priorität: **21.03.2000 DE 10013965**

(43) Veröffentlichungstag der Anmeldung:
**27.02.2002 Patentblatt 2002/09**

(73) Patentinhaber: **Hayes Lemmerz Holding GmbH 53639 Königswinter (DE)**

(72) Erfinder: **SCHWENDEMANN, Heinz 53225 Bonn (DE)**

(74) Vertreter: **Althaus, Arndt, Dipl.-Ing. et al Patentanwälte, Buschhoff Hennicke Althaus Postfach 19 04 08 50501 Köln (DE)**

(56) Entgegenhaltungen:
**EP-A- 0 507 058**    **EP-A- 0 927 879**
**EP-A- 0 928 961**

**Beschreibung**

Die Erfindung betrifft ein Regelverfahren für einen zweiaxialen Räderprüfstand zur Simulation von Fahrbelastungen nach dem Oberbegriff des Anspruchs 1 und einen für das Regelverfahren geeignet ausgebildeten zweiaxialen Räderprüfstand nach Anspruch 8.

Ein Fahrzeugrad unterliegt im realen Fahreinsatz extremen und ständig wechselnden Belastungen. Das Fahrzeugrad als Sicherheitsbauteil an einem Fahrzeug muß diesen Belastungen während seiner gesamten Einsatzdauer standhalten können. Bei der Entwicklung eines neuen Rades müssen die Form des Rades, die Materialdicke und der Werkstoff so gewählt werden, daß eine ausreichende Betriebsfestigkeit bei minimalem Gewicht erzielt wird. Zum Nachweis der Betriebsfestigkeit werden einerseits Fahrversuche mit Fahrzeugen z.B. auf geeigneten Teststrecken durchgeführt, andererseits verschiedene Prüfmethoden verwendet, um die Fahrbelastungen des Fahrzeugrades zu simulieren. Mittlerweile stehen eine Reihe von Prüfmethoden zur Verfügung, mit denen sowohl die statischen Betriebslasten als auch die dynamischen Belastungskomponenten, die möglichst genau einem momentanen Fahrzustand entsprechen sollen, simuliert werden können. Für die Qualitätsprüfung in der Serienfertigung werden meist Prüfmethoden eingesetzt, die mit stationärer, d.h. konstanter Last durchgeführt werden. Im realen Fahrbetrieb hingegen sind die auf das Fahrzeugrad wirkenden Radial- und Axialkräfte nicht konstant, sondern hängen von einer Vielzahl von Faktoren ab. Um zeitlich veränderliche, instationäre Radial- und Axialkräfte auf ein zu prüfendes Rad aufbringen zu können, sind zweiaxiale Räderprüfstände entwickelt worden. Ein entsprechender zweiaxialer Räderprüfstand (ZWARP) ist seit etwa 1989 bei den meisten Räderherstellern im Einsatz und wird z.B. in "Automobiltechnische Zeitschrift", 88 (1986), Seite 543 ff. oder in EP 0 927 879 A1 in seinem Aufbau beschrieben.' Das zu prüfende Rad läuft mit montierten Reifen im Inneren einer von einer Antriebseinheit angetriebenen Trommel mit Anlaufringen ab und wird mittels einer Belastungseinheit gegen die Trommel gedrückt. Die Belastungseinheit des Räderprüfstandes (ZWARP) wird hierbei von zwei getrennten servo-hydraulischen Belastungszylindern aufgebracht, die senkrecht zueinander auf Horizontalschlitten mit Doppelsäulen angeordnet sind. Der eine der Belastungszylinder ist ein Vertikalbelastungszylinder zur Einstellung einer Vertikalkraft, der andere ein Horizontalbelastungszylinder zur Einstellung einer Horizontalkraft. Um eine Annäherung an reale Räderbelastungen erzielen zu können, kann der Sturzwinkel des Rades relativ zur Trommel mittels eines an einem Schwenkkopf angreifenden Sturzzylinder verstellt werden.

Der zweiaxiale Räderprüfstand (ZWARP) hat sich im Einsatz bewährt. Allerdings führen die Simulationen auf dem Räderprüfstand nur zu brauchbaren Ergebnissen, wenn die Ansteuerparameter für den Räderprüfstand (ZWARP) dem Beanspruchungszustand im realen Fahrbetrieb möglichst nahekommen. Um diese Vorgabe zu erfüllen, werden bis zum heutigen Tage zuerst in einem realen Fahrversuch die von der jeweiligen Radgeometrie abhängigen Beanspruchungen eines Testrades in intensiven Messungen mit Dehnungsmesstreifen (DMS) gemessen. Zur Einstellung der Ansteuerparameter für den zweiaxialen Räderprüfstand (ZWARP) werden in iterativen Schritten die einzelnen Ansteuerparamter (Vertikalkraft, Horizontalkraft, Sturzwinkel) variiert, bis die im realen Fahrversuch an charakteristischen Radpartien zuvor ermittelten Dehnungs- und Spannungsverläufe auch an denselben Radpartien im Simulationsversuch gemessen werden. Die Einstellung der Horizontal- und Vertikalbelastungszylinder erfolgt herbei kraftgeregelt, die Einstellung des Sturzwinkels winkelgeregelt. Da das Referenzsignal bei dem bisher bekannten Steuerverfahren für den zweiaxialen Räderprüfstand von den im Fahrversuch ermittelten Dehnungsverläufe gebildet wird, kann auf die vorherige Bestimmung der Dehnungsverläufe in den Radpartien mittels DMS-Messungen nicht verzichtet werden.

Aufgabe der vorliegenden Erfindung ist es, ein Regelverfahren und einen hierfür geeigneten zweiaxialen Räderprüfstand vorzuschlagen, die ohne vorherige Dehnungsmessstreifenmessungen eine Einstellung der Ansteuerparameter des Räderprüfstandes ermöglichen.

Diese Aufgabe wird in ihrem verfahrensmäßigen Aspekt dadurch gelöst, daß die Einstellung von Horizontalkraft, Vertikalkraft und Sturzwinkel in Abhängigkeit von den im realen Fahrbetrieb ermittelten bzw. ermittelbaren Radaufstandskraft und Radseitenkraft vorgenommen wird und daß als Regelgröße für den Sturzwinkel die Position des Kraftangriffspunktes der Kraftresultierenden von Radaufstandskraft und Radseitenkraft verwendet wird.

Die Radaufstandskraft und die Radseitenkraft können auf einfache Weise im Fahrversuch mit speziellen radgeometrieunabhängigen Messnaben gemessen werden und stellen radspezifische Größen dar, die von der Felgengrösse, dem Reifen, dem Fahrzeug und der Teststrecke abhängig sind. Bei Tests an Fahrzeugrädern hat sich nun gezeigt, daß die Beanspruchung eines Fahrzeugrades im Räderprüfstand mit den Beanspruchungen des Fahrzeugrades im realen Fahrversuch identisch ist, wenn die Kraftresultierende aus Radaufstandskraft und Radseitenkraft beim Kontakt des Reifens mit der Fahrbahn mit der Kraftresultierenden im Räderprüfstand (ZWARP) nach Betrag, Richtung und Position identisch ist bzw. weitestgehend übereinstimmt. Nachdem diese Hypothese verifiziert wurde, hat sich herausgestellt, daß sich die Position des Kraftangriffspunktes der Kraftresultierenden von Radaufstandskraft und Radseitenkraft als Regelgröße für den Sturzwinkel verwenden läßt. Da bei dem erfindungsgemäßen Verfahren sowohl auf die vorherige zeit- und ko-

stenintensive Messreihe mit Dehnungsmessstreifen am Fahrzeugrad als auch während der Simulation im Räderprüfstand auf eine Messung mit Dehnungsmessstreifen verzichtet werden kann, bietet das erfindungsgemäße Regelverfahren zur Festlegung der Ansteuerparameter für den Räderprüfstand erhebliche Zeit- und Kostenvorteile. Ein zusätzlicher Vorteil ist, daß der Einfluß des Reifens und des Reifenluftdrucks im ZWARP mit berücksichtigt bzw. eliminiert ist, da die im realen Fahrversuch ermittelbaren Daten des Reifens mit dem erfindungsgemäßen Regelverfahren am Räderprüfstand nachgestellt werden.

Bei der bevorzugten Ausführungsform des Verfahrens wird, um die Verwendung der Position des Kraftangriffspunktes als Regelgröße zu ermöglichen, die Sturzzylinderkraft gemessen. Diese Messung kann in besonders einfacher Weise mit einer am Sturzzylinder angeordneten Messdose erfolgen. Diese Vorgehensweise hat den Vorteil, daß die an dem Sturzzylinder gemessenen Werte nicht durch Reibungsverluste oder Messfehler, wie sie z.B. bei der Druckmessung am Sturzzylinder auftreten würden, verfälscht werden.

Um das Regelverfahren mit gut strukturierten Algorithmen durchführen zu können, ist in einer bevorzugten Ausführungsform des Verfahrens die Position des Kraftangriffspunktes der Kraftresultierenden durch den Abstand des Kraftangriffspunktes von der Radmitte definiert. Bei dieser Ausgestaltung des Verfahrens läßt sich als Algorithmus für die Position des Kraftangriffspunktes die von ermittelbaren Daten des Reifens und den geometrischen Verhältnis im Räderprüfstand abhängige Gleichung

$$R_{DS} = (M_{Fs} + Fa \times R_{dyn})/F_r - a1$$

bestimmen, wobei

$M_{Fs}$:   Moment der Sturzzylinderkraft um den Sturzwinkel-Schwenkpunkt;
Fa:   axiale Radseitenkraft nach Fahrversuch;
Fr:   radiale Radaufstandskraft nach Fahrversuch;
$R_{dyn}$:   Dynamischer Rollradius; und
a1:   Abstand des Sturzwinkel-Schwenkpunktes von der Reifenmitte.

Bei der bevorzugten Ausführungsform des Verfahrens werden mittels einer Regel- und Auswerteeinheit die Vertikalkraft, die Horizontalkraft und der Sturzwinkel solange verändert, bis eine eindeutige Lösung für den oben wiedergegebenen Algorithmus zusammen mit den Algorithmen

$$Fr = - Fh \times \sin(\gamma) - Fv \times \cos(\gamma);$$

und

$$Fa = - Fh \times \cos(\gamma) + Fv \times \sin(\gamma)$$

bzw.

$$Fv = - Fr \times \cos(\gamma) + Fa \times \sin(\gamma);$$

und

$$Fh = - Fr \times \sin(\gamma) - Fa \times \cos(\gamma).$$

bei vorgegebenem $R_{dyn}$, $R_{Ds}$, Fa und Fr gefunden wurde.

Bei einer weiter bevorzugten Ausführungsform des Verfahrens wird die Position des Kraftangriffspunktes in erster Näherung in die Reifenmitte verlegt, d.h. der Mittenversatz des Kraftangriffspunktes von der Radmitte zu Null gesetzt. In umfangreichen Messungen wurde überraschenderweise festgestellt, daß bereits bei dieser Näherungslösung, falls z.B. aus dem Fahrversuch nur die Radaufstandskraft und die Radseitenkraft, nicht jedoch die Position des Kraftangriffs bekannt ist, eine hinreichend genaue Übereinstimmung der am Räderprüfstand eingestellten Ansteuerparameter mit den sich im realen Fahrbetrieb ergebenden Fahrbelastungen erzeugen läßt.

Ein zur Durchführung des Verfahrens besonders geeigneter Räderprüfstand kennzeichnet sich dadurch, daß in die Regel- und Auswerteeinheit als Eingangsgrößen die aus dem realen Fahrbetrieb bekannte Radaufstandskraft und Radseitenkraft eingebbar ist und daß eine Messeinrichtung vorgesehen ist, welche die am Sturzzylinder wirkende Sturzzylinderkraft misst. Wie bereits oben dargelegt wurde, besteht bei der bevorzugten Ausführungsform des Räderprüfstandes die Messeinrichtung aus einer dem Sturzzylinder zugeordneten Messdose, da die Messdose eine äußerst einfache und genaue Messung der Sturzzylinderkraft, frei von Reibungsverlusten und Hysteresefehlern, ermöglicht.

Das erfindungsgemäße Verfahren wird nachfolgend unter Bezugnahme auf ein schematisches Schaubild erläutert:

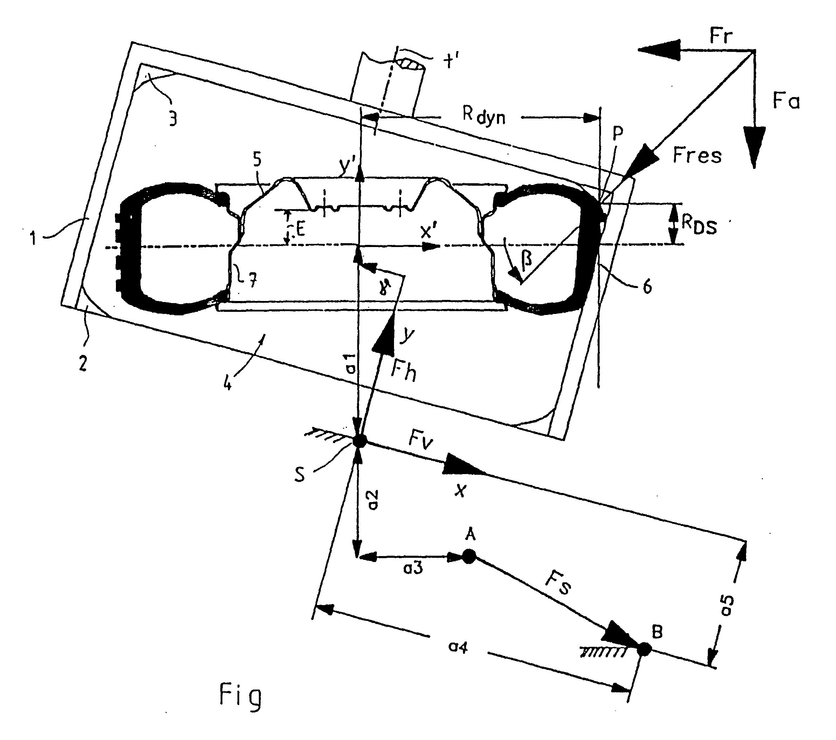

In der einzigen Zeichnung (Fig.) sind die wesentlichen geometrischen Verhältnisse eines zweiaxialen Räderprüfstandes (ZWARP) als Doppelpfeile und die zur Bestimmung der Ansteuerparamter heranzuziehenden Kräfte als Kraftpfeile dargestellt. Auf eine detaillierte Darstellung des Räderprüfstandes wurde verzichtet, da ein entsprechender Räderprüfstand z.B. in ATZ 88 (1986) 10, S. 543 ff. beschrieben wird, auf welchen Zeitschriftenartikel hier Bezug genommen wird. Von dem Räderprüfstand ist daher nur die Trommel 1 mit den schematisch gezeigten Anlaufringen 2,3 dargestellt. Der Abstand zwischen den Anlaufringen 2,3 kann verändert werden, damit Fahrzeugräder 4 unterschiedlicher Reifen- und Felgenbreite auf demselben Räderprüfstand getestet werden können. Die Trommel 1 wird über einen nicht gezeigten, unterhalb der Trommel angeordneten Antriebsmotor angetrieben. Trommel 1 und Antriebsmotor sind Bestandteile der nicht dargestellten Antriebseinheit. Das Fahrzeugrad 4 bestehend aus Schüssel 5, Felge 7 und montiertem Reifen 6, ist mit seiner Schüssel 5 an einem nicht dargestellten, um den Schwenkpunkt S schwenkbaren Schwenkkopf lösbar befestigt. Der Schwenkpunkt S des Schwenkkopfes ist über eine hier mittels der Doppelpfeile a2,a3 angedeuteten Hebelmechanik schwenkbar ausgeführt, um den Sturzwinkel $\gamma$, d.h. den Winkel zwischen Radachse y' und Trommelachse t', einstellen zu können. Die Y-Achse des X-Y-Koordinatensystems des Prüfstandes ist zur Trommelachse t' parallel. Für die Sturzverstellung des Sturzwinkels $\gamma$ ist ein durch den Kraftpfeil Fs angedeuteter Sturzzylinder vorgesehen, der auf die Hebelmechanik a2, a3 einwirkt. Die Hebelmechanik a2,a3 bzw. der Schwenkkopf haben konstante, radprüfstandsabhängige Größen bzw. Abmessungen. Der Lagerpunkt A ist daher auf einer Kreisbahn um den Schwenkpunkt S durch Abstandsveränderung des Sturzzylinders-Fs veränderbar. Auch der Abstand zwischen dem Sturzwinkel-Schwenkpunkt S und dem Lagerpunkt B ist konstant vorgegeben und von den geometrischen Verhältnissen des Räderprüfstandes abhängig, wie durch die Abstands- bzw. Doppelpfeile a4 und a5 angedeutet ist.

Am Lagerpunkt B ist eine nicht dargestellte Kraftmessdose angeordnet, mit der die am Sturzzylinder wirkende Kraft messbar ist. Der Schwenkkopf und der Sturzzylinder sind mit einer nicht dargestellten Belastungseinheit verbunden, die von zwei getrennten Belastungszylindern, die an Horizontalschlitten mit Doppelsäulenführung angeordnet sind, gebildet wird. Parallel zur Trommelachse t' wirkt also ein servo-hydraulischer Horizontalzylinder, um das Rad 4 mit der Horizontalkraft Fh gegen die Trommel 1 seitlich vorzubelasten und senkrecht zur Trommelachse t' wirkt ein servo-hydraulischer Vertikalzylinder, um das Rad 4 mit der Kraft Fv gegen die Trommel 1 zu drücken. Mittels einer nicht dargestellten Steuer- und Auswerteeinheit können die Vertikalkraft Fv, die Horizontalkraft Fh sowie der Sturzwinkel $\gamma$ eingestellt werden. Ferner wird mit der Steuer- und Auswerteeinheit die in der Messdose gemessene Kraft des Sturzzylinders Fs gemessen und verarbeitet.

In der oberen, rechten Ecke der Figur ist eine Kraftresultierende Fres eingezeichnet, die sich aus der Radaufstandskraft Fr und der Radseitenkraft Fa zusammensetzt, wobei diese beiden Kräfte in einem realen Fahrversuch z.B. mit Messnaben zuvor bestimmt wurden. Ferner wurden in diesem Fahrversuch oder mit einem ebenen Abrollprüfstand auch der dynamische Rollradius $R_{dyn}$ und die Position der Kraftresultierende $F_{res}$ gemessen, d.h. der sich im realen Fahrversuch einstellende Reifenaufstandspunkt wurde zuvor bestimmt. Diese Position ist hier mit $R_{ds}$ bezeichnet und stellt den Abstand des Kraftangriffspunktes P im ZWARP von der Radmitte x' dar.

Die Anmelderin hat mit DMS-Vergleichsmessungen nachgewiesen, daß sich mit dem Räderprüfstand die realen Radbeanspruchungen simulieren lassen, wenn die im Fahrversuch ermittelte Kraftresultierende aus Radaufstandskraft und Radseitenkraft nach Betrag, Richtung und Position mit der sich im Räderprüfstand (ZWARP) einstellenden Kraftresultierenden nach Betrag, Richtung und Position identisch ist. Durch den Beweis dieser Hypothese kann nun ein Regelverfahren aufgestellt werden, nach welchem die Ansteuerparameter (Horizontalkraft Fh, Vertikalkraft Fv und Sturzwinkel $\gamma$) bei Bekanntsein der Radaufstandskraft Fr, Radseitenkraft Fa, des dynamischen Rollradius $R_{dyn}$ und des Radmittenabstandes $R_{Ds}$ bestimmen lassen, sofern als zusätzliche Bestimmungsgröße die Sturzzylinderkraft Fs gemessen wird. Aus dem Kräftegleichgewicht im X-Y-Koordinatensystem in der Belastungseinheit bzw. im X'-, Y'-Koordinatensystem des zu prüfenden Fahrzeugrads 4 erhält man für die Verknüpfung der Kraftresultierenden $F_{res}$ bzw. der Radaufstandskraft Fr und der Radseitenkraft Fa mit den an der Belastungseinheit einstellbaren Ansteuerparametern:

$$Fv = - Fr \times \cos (\gamma) + Fa \times \sin (\gamma) \, ;$$

und

$$Fh = - Fr \times \sin (\gamma) - Fa \times \cos (\gamma).$$

Um für dieses Gleichungssystem eine eindeutige und mit den realen Beanspruchungen des Fahrzeugrades übereinstimmende Lösung zu finden, wird als weiterer Algorithmus die Gleichung

$$R_{Ds} = M_{Fs} + Fa \times (R_{dyn})/Fr - a1$$

in der Auswerte- und Regeleinheit eingegeben, welche Gleichung sich aus dem Momentengleichgewicht im Sturzwinkel (Drehpunkt S) erhalten lässt. Da die Sturzzylinderkraft Fs gemessen wird und die Lage des Sturzzylinders unmittelbar mit dem Sturzwinkel verknüpft ist bzw. über $\gamma$ und/oder die konstanten prüfstandsspezifischen Abmessungen a2,a3,a4,a5 und $\gamma$ bestimmt werden kann, ist das Moment $M_{Fs}$, das die Kraft $F_s$ um den Schwenkpunkt S erzeugt, berechenbar, so daß sich mit dem oben wiedergegebenen Algorithmen in iterativen Schritten , automatisch geregelt eine eindeutige Lösung für die einzustellenden Ansteuerparameter (Fh, Fv, $\gamma$) finden läßt.

Die Bestimmung der Ansteuerparameter für den Räderprüfstand (ZWARP) erfolgt hierbei unabhängig von der Einpresstiefe E und der Schüssel- und Felgengeometrie. Daher können dieselben Ansteuerparameter verwendet werden, wenn in einem Fahrversuch für ein Fahrzeugrad gleiche Radaufstands- und Radseitenkräfte ermittelt wurden. Überraschenderweise hat sich auch gezeigt, daß selbst ohne Kenntnis des tatsächlich sich im Fahrbetrieb einstellenden Reifenaufstandspunktes eine hinreichend genaue Bestimmung der Ansteuerparameter finden läßt, wenn der Radmittenabstand $R_{ds}$ zu Null gesetzt wird, d.h. in die Radmitte X' verlegt wird.

**Patentansprüche**

1.  Regelverfahren für einen zweiaxialen Räderprüfstand zur Simulation von Fahrbelastungen, der eine Belastungseinheit mit einem servo-hydraulischen Vertikalbelastungszylinder zur Einstellung einer Vertikalkraft, einem servo-hydraulischen Horizontalbelastungszylinder zur Einstellung einer Horizontalkraft und mit einem mittels eines Sturzzylinders verstellbaren Schwenkkopf zur Einstellung des Sturzwinkels eines zu prüfenden Rades, und der eine Antriebseinheit mit einer angetriebenen Trommel mit Anlaufringen aufweist, an die das zu prüfende Rad mit der Belastungseinheit gedrückt wird, wobei der Vertikalbelastungszylinder und der Horizontalbelastungszylinder kraftgeregelt und der Sturzwinkel winkelgeregelt eingestellt werden, **dadurch gekennzeichnet, daß** die Einstellung von Horizontalkraft (Fh), Vertikalkraft (Fv) und Sturzwinkel (γ) in Abhängigkeit von den in einem Fahrversuch ermittelten Radaufstandskraft (Fr) und Radseitenkraft (Fa) vorgenommen wird und als Regelgröße für den Sturzwinkel (γ) die Position ($R_{Ds}$) des Kraftangriffspunktes (P) der Kraftresultierenden ($F_{res}$) von Radaufstandskraft (Fr) und Radseitenkraft (Fa) verwendet wird.

2.  Regelverfahren nach Anspruch 1, **dadurch gekennzeichnet, daß** für die Verwendung des Kraftangriffspunktes (P) als Regelgröße die Sturzzylinderkraft (Fs) gemessen wird.

3.  Regelverfahren nach Anspruch 2, **dadurch gekennzeichnet, daß** die Sturzzylinderkraft (Fs) mittels einer am Sturzzylinder angeordneten Messdose gemessen wird.

4.  Regelverfahren nach einem der Ansprüche 1 bis 3, **dadurch gekennzeichnet, daß** die Position ($R_{Ds}$) des Kraftangriffspunktes der Kraftresultierenden ($F_{res}$) durch den Abstand des Kraftangriffspunktes (P) von der Radmitte (x') definiert wird.

5.  Regelverfahren nach einem der Ansprüche 1 bis 4, **dadurch gekennzeichnet, daß** der Abstand ($R_{Ds}$) des Kraftangriffspunktes (P) der Kraftresultierenden (Fres) von der Radmitte (x') mittels der Gleichung

chung

$$R_{Ds} = (M_{Fs} + Fa \times R_{dyn})/Fr - a1$$

bestimmt wird, mit

$M_{Fs}$: Moment der Sturzzylinderkraft (Fs) um den Sturzwinkel-Schwenkpunkt (S);
Fa: axiale Radseitenkraft aus Fahrversuch;
Fr: radiale Radaufstandskraft aus Fahrversuch;
$R_{dyn}$: dynamischer Rollradius;
a1: Abstand des Sturzwinkel-Schwenkpunktes (S) von Reifenmitte (x').

6.  Regelverfahren nach einem der Ansprüche 1 bis 5, **dadurch gekennzeichnet, daß** mittels einer Steuer- und Auswerteeinheit die Vertikalkraft (Fv), Horizontalkraft (Fh) und der Sturzwinkel (γ) verändert werden, bis eine eindeutige Lösung für die Gleichungen

$$R_{Ds} = (M_{Fs} + Fa \times R_{dyn})/Fr - a1$$

und

$$Fv = - Fr \times \cos(\gamma) + Fa \times \sin(\gamma)$$

und

$$Fh = -Fr \times \sin(\gamma) - Fa \times \cos(\gamma)$$

bei im Fahrversuch oder auf dem ebenen Abrollprüfstand ermittelten $R_{dyn}$, $R_{Ds}$, Fa und Fr gefunden wurde.

7.  Regelverfahren nach einem der Ansprüche 1 bis 6, **dadurch gekennzeichnet, daß** die Position des Kraftangriffspunktes (P) in erster Näherung in die Reifenmitte (X') verlegt wird.

8.  Räderprüfstand zur Durchführung des Verfahrens nach einem der Ansprüche 1 bis 7 zur Simulation von Fahrbelastungen an Fahrzeugrädern mit einer Belastungseinheit, die einen servo-hydraulischen, kraftgeregelten Vertikalbelastungszylinder zur Einstellung einer Vertikalkraft, einen servo-hydraulischen, kraftgeregelten Horizontalbelastungszylinder zur Einstellung einer Horizontalkraft und einen mittels eines winkelgeregelten, servo-hydraulischen Sturzzylinders verstellbaren Schwenkkopf zur Einstellung des Sturzwinkels des zu prüfenden Rades aufweist, mit einer Antriebseinheit, die eine angetriebene Trommel mit Anlaufringen aufweist, an die das zu prüfende Rad mittels der Belastungseinheit andrückbar ist, und

mit einer Regel- und Auswerteeinheit zur Einstellung der Horizontalkraft, Vertikalkraft und des Sturzwinkels,

**dadurch gekennzeichnet, daß** in die Regel- und Auswerteeinheit als Eingangsgröße die aus dem Fahrversuch bekannte Radaufstandskraft (Fr) und Radseitenkraft (Fa) eingebbar ist und eine Messeinrichtung vorgesehen ist, welche die am Sturzzylinder wirkende Sturzzylinderkraft (Fs) misst.

9. Räderprüfstand nach Anspruch 8, **dadurch gekennzeichnet, daß** die Messeinrichtung aus einer dem Sturzzylinder zugeordneten Messdose besteht.

**Claims**

1. Control method for a biaxial wheel test stand for simulating driving loads, which consists of a load unit having a servo-hydraulic vertical load cylinder for adjusting a vertical force, a servo-hydraulic horizontal load cylinder for adjusting a horizontal force, and a pivot head which can be adjusted by means of a camber cylinder for adjusting the camber angle of a wheel to be tested, and which comprises a drive unit with a driven drum having starting rings, to which the wheel to be tested is pressed with the load unit, whereby the vertical load cylinder and the horizontal load cylinder are adjusted by controlling the force and the camber cylinder by controlling the angle, **characterized in that** the adjustment of the horizontal force (Fh), the vertical force (Fv) and the camber angle ( ) are carried out in dependence on the wheel radial force (Fr) and the wheel side force (Fa) determined during a road test, and that the position ($R_{Ds}$) of the point (P) of application of the resulting force ($F_{res}$) of the wheel radial force (Fr) and the wheel side force (Fa) are used as the control magnitude for the camber angle ($\gamma$).

2. Control method according to claim 1, **characterized in that** the camber cylinder force (Fs) is measured as the control magnitude for the use of the point (P) of the application of the force.

3. Control method according to claim 2, **characterized in that** the camber cylinder force (Fs) is measured by means of a measuring tin arranged at the camber cylinder.

4. Control method according to one of claims 1 to 3, **characterized in that** the pcsition ($R_{Ds}$) of the point of application of the resulting force ($F_{res}$) is defined by the distance of the point (P) of application of the force from the wheel center (x').

5. Control method according to one of claims 1 to 4, **characterized in that** the distance ($R_{Ds}$) of the of the point (P) of application of the resulting force ($F_{res}$) from the wheel center (x') is determined by means of the equation

$$R_{Ds} = (M_{Fs} + Fa \times R_{dyn})/Fr - a1$$

wherein

$M_{Fs}$: momentum of the camber cylinder force (Fs) around the pivot point (S) of the camber angle;

Fa: axial wheel side force from the road test;

Fr: radial wheel radial force from the road test;

$R_{dyn}$: dynamic roll radius;

a1: distance of the pivot point (S) of the camber angle to the tire center (x').

6. Control method according to one of claims 1 to 5, **characterized in that** the vertical force (Fv), the horizontal force (Fh), and the camber angle ( ) are changed by means of a control or evaluation unit, until an unambiguous solution for the equations

$$R_{Ds} = (M_{Fs} + Fa \times R_{dyn})/Fr - a1$$

and

$$Fv = - Fr \times \cos(\gamma) + Fa \times \sin(\gamma)$$

and

$$Fh = - Fr \times \sin(\gamma) - Fa \times \cos(\gamma)$$

has been found with $R_{dyn}$, $R_{Ds}$, Fa and Fr determined during the road test or on the even roll-off test stand.

7. Control method according to one of claims 1 to 6, **characterized in that** the position of the point (P) of application of the force is moved to the tire center (X') in a first approximation.

8. Wheel test stand for executing the method according to one of claims 1 to 7 for simulating driving loads on vehicle wheels
with a load unit comprising a servo-hydraulic vertical load cylinder which is controlled by force for adjusting a vertical force, a servo-hydraulic horizontal load cylinder which is controlled by force for adjusting a horizontal force, and a pivot head which can be adjusted by means of a servo-hydraulic camber cylinder which is controlled by the angle for adjusting the camber angle of the wheel to be tested,
with a drive unit which comprises a driven drum with starting rings, to which the wheel to be tested can be pressed by means of the load unit, and
with a control and evaluation unit for adjusting the horizontal force, the vertical force and the camber angle,
**characterized in that** the wheel radial force (Fr) and the wheel side force (Fa) known from the road test can be entered into the control and evaluation unit as an input magnitude, and that a measuring unit is provided which measures the camber cylinder force (Fs) acting on the camber cylinder.

9. Wheel test stand according to claim 8, **characterized in that** the measuring device consists of a measuring tin assigned to the camber cylinder.

## Revendications

1. Procédé de régulation pour un banc d'essai biaxial de roues pour la simulation des charges de circulation, comprenant : une unité de chargement comportant un cylindre servo-hydraulique de chargement vertical pour régler une force verticale ; un cylindre servo-hydraulique de chargement horizontal pour régler une force horizontale ; et une tête orientable réglable au moyen d'un cylindre de carrossage pour régler l'angle de carrossage d'une roue à tester ; et : une unité d'entraînement avec un tambour entraîné muni d'anneaux d'accostage, sur lesquels la roue à tester est pressée au moyen de l'unité de chargement ; procédé dans lequel on règle le cylindre de chargement vertical et le cylindre de chargement horizontal avec régulation de la force et on règle l'angle de carrossage avec régulation de l'angle, **caractérisé en ce que** le réglage de la force horizontale (Fh), de la force verticale (Fv) et de l'angle de carrossage (γ) est réalisé en fonction de la force (Fr) d'appui au sol de la roue et de la force latérale (Fa) de la roue obtenues dans un essai de circulation, et on utilise comme grandeur de régulation pour l'angle de carrossage (γ) la position (R$_{Ds}$) du point d'application d'effort (P) de la résultante (F$_{res}$) de la force d'appui au sol (Fr) et de la force latérale (Fa) de la roue.

2. Procédé de régulation selon la revendication 1, **caractérisé en ce qu'**on mesure la force (Fs) du cylindre de carrossage pour l'utilisation du point d'application d'effort (P) en tant que grandeur de régulation.

3. Procédé de régulation selon la revendication 2, **caractérisé en ce qu'**on mesure la force (Fs) du cylindre de carrossage au moyen d'une boîte dynamométrique agencée sur le cylindre de carrossage.

4. Procédé de régulation selon l'une des revendications 1 à 3, **caractérisé en ce qu'**on définit la position (R$_{Ds}$) du point d'application d'effort de la résultante (F$_{res}$) par la distance du point d'application d'effort (P) par rapport au milieu de la roue (x').

5. Procédé de régulation selon l'une des revendications 1 à 4, **caractérisé en ce qu'**on détermine la distance (R$_{Ds}$) du point d'application d'effort (P) de la résultante (F$_{res}$) par rapport au milieu de la roue (x') au moyen de l'équation

$$R_{DS} = (M_{Fs} + Fa \times R_{dyn}) / Fr - a1$$

dans laquelle :

M$_{Fs}$ : moment de la force du cylindre de carrossage (Fs) autour du point de pivotement (S) pour l'angle de carrossage;
Fa : force latérale axiale sur la roue, d'après l'essai en circulation ;
Fr : force d'appui radiale sur la roue, d'après l'essai en circulation ;
R$_{dyn}$ : rayon de roulement dynamique ;
a1 : distance entre le point de pivotement (S) pour l'angle de carrossage et le milieu du pneu (x').

6. Procédé de régulation selon l'une des revendications 1 à 5, **caractérisé en ce qu'**au moyen d'une unité de pilotage et de traitement on modifie la force verticale (Fv), la force horizontale (Fh) et l'angle de carrossage (γ) jusqu'à ce que soit trouvée une solution univoque pour les équations suivantes :

$$R_{ds} = (M_{Fs} + Fa \times R_{dyn}) / Fr - a1$$

et

$$Fv = - Fr \times \cos(\gamma) + Fa \times \sin(\gamma)$$

et

$$Fh = -Fr \times \sin(\gamma) - Fa \times \cos(\gamma)$$

avec les R$_{dyn}$, R$_{Ds}$, Fa et Fr obtenus lors de l'essai en circulation ou sur le banc de roulement plan.

7. Procédé de régulation selon l'une des revendications 1 à 6, **caractérisé en ce qu'**en première approximation on décale au milieu du pneu (x') la position du point d'application d'effort (P).

8.  Banc d'essai de roues pour la mise en oeuvre du procédé selon l'une des revendications 1 à 7, pour la simulation des charges de circulation sur des roues de véhicule, comprenant :

    -   une unité de chargement qui comporte un cylindre servo-hydraulique de chargement vertical, à régulation d'effort, pour régler une force verticale, un cylindre servo-hydraulique de chargement horizontal, à régulation d'effort, pour régler une force horizontale, et une tête pivotante réglable au moyen d'un cylindre servo-hydraulique de carrossage, à régulation d'angle, pour régler l'angle de carrossage de la roue à tester,
    -   une unité d'entraînement, qui comprend un tambour entraîné avec des anneaux d'accostage, sur lesquels la roue à tester peut être pressée au moyen de l'unité de chargement, et
    -   une unité de régulation et de traitement pour régler la force horizontale, la force verticale et l'angle de carrossage,

    **caractérisé en ce qu'**on peut saisir en tant que grandeur d'entrée dans l'unité de régulation et de traitement la forces d'appui au. sol (Fr) et la force latérale (Fa) de la roue connues à partir de l'essai en circulation, et il est prévu un dispositif de mesure qui mesure la force du cylindre de carrossage (Fs) s'exerçant sur le cylindre de carrossage.

9.  Banc d'essai selon la revendication 8, **caractérisé en ce que** le dispositif de mesure consiste en une boite dynamométrique associée au cylindre de carrossage.

Fig